# FASCICULE DE BREVET EUROPEEN

(11) **EP 3 450 057 B1**
(45) Date de publication et mention de la délivrance du brevet: **24.06.2020**
(21) Numéro de dépôt: 18186414.1
(22) Date de dépôt: 30.07.2018
(51) Int. Cl.: B22F 3/105, B22F 5/00, B33Y 40/00, B08B 9/00, B08B 1/00, B08B 9/04, B29C 64/40, B22F 3/24, B08B 9/043

(54) **PROCÉDÉ DE DÉBOUCHAGE DE CANALISATIONS DANS DES PIÈCES OBTENUES PAR FABRICATION ADDITIVE**
VERFAHREN ZUM BESEITIGEN VON VERSTOPFUNGEN IN KANALISATIONSSYSTEMEN IN DURCH ADDITIVE FERTIGUNG ERHALTENEN WERKSTÜCKEN
METHOD FOR OPENING PIPES INTO PARTS OBTAINED BY ADDITIVE MANUFACTURING

(30) Priorité: 31.08.2017 FR 1758068
(43) Date de publication de la demande: 06.03.2019
(73) Titulaire: Safran Landing Systems, 78140 Vélizy-Villacoublay (FR)
(72) Inventeur: RIGO, Olivier, 12 B-4102 SERAING (BE); KAIRET, Thomas, 12 B-4102 SERAING (BE); LUTTENBACHER, Denis, 67120 MOLSHEIM (FR); LAMBRE, Stéphane, 78140 VELIZY-VILLACOUBLAY (FR); ARGENTERO, Stefano, 67120 MOLSHEIM (FR); BALDUCCI, Gérard, 78140 VELIZY-VILLACOUBLAY (FR)
(74) Mandataire: Lavialle, Bruno François Stéphane

(56) Documents cités:
- EP-A1- 3 053 676
- US-A1- 2012 107 496
- US-A1- 2017 144 382

## Description

L'invention concerne un procédé de débouchage de canalisations dans des pièces obtenues par fabrication additive.

### ARRIERE PLAN DE L'INVENTION

En aéronautique, l'intérêt s'est récemment porté sur la réalisation de blocs hydrauliques en titane par la technologie de fabrication additive, notamment la fusion par faisceau d'électrons.

Des particules d'alliage de titane (typiquement du TA6Al4V) sous forme de poudre sont introduites par couches successives dans une enceinte sous vide. L'enceinte est chauffée, typiquement à une température de l'ordre de 700 degrés. La couche introduite est d'abord préchauffée pour qu'elle se solidarise sous la forme d'un amalgame de particules frittées. Puis un canon à électron est commandé pour bombarder la partie de la couche amalgamée destinée à former la pièce en cours de fabrication et provoquer sa fusion. On obtient ainsi une pièce en alliage solide, de caractéristiques mécaniques se situant entre une pièce moulée et une pièce forgée, mais dont tous les espaces libres, et notamment les canalisations et autres orifices, sont remplis de cet amalgame de particules de métal faiblement liées entre elles. Après refroidissement de la pièce, il convient donc d'éliminer complètement cet amalgame. Des opérations de nettoyage d'amalgames de poudre à l'aide d'outillages sont décrites dans les demandes de brevets suivantes: US 2012/107496 A1, EP 3 053 676 A1, US 2017/144382 A1.

Cette opération de nettoyage se fait généralement en enceinte close pour récupérer les particules, à l'aide par exemple d'une buse à air comprimé. Cependant, l'expérience montre que les canalisations de faible diamètre (typiquement quelques millimètres) que l'on trouve habituellement dans les blocs hydrauliques sont impossibles à nettoyer à l'aide d'une buse.

Il a été proposé dans le document EP3153256 de fabriquer un cordon de métal solidifié à l'intérieur de chacune des canalisations en même temps que le reste de la pièce. Lors du nettoyage de la pièce, on commence par extraire le cordon de chacune des canalisations, qui entraîne avec lui une bonne partie des particules amalgamées présente dans l'orifice. Celui-ci est alors débouché et il suffit de finir le nettoyage avec la buse. Cependant, ce procédé n'est pas adapté à toutes les canalisations. Certaines d'entre elles ont une conformation tortueuse qui empêche l'extraction du cordon. En outre, la rupture d'un cordon en cours d'extraction est catastrophique puisqu'il sera impossible d'extraire la partie du cordon encore présente dans la canalisation. Enfin, le cordon ainsi constitué représente de la matière fusionnée et irrécupérable, augmentant le temps et le coût de fabrication de la pièce.

Dans le cas particulier des blocs hydrauliques, certaines des canalisations de petit diamètre partent non de la surface de la pièce, mais de l'intérieur de puits débouchants de grand diamètre destinés à recevoir des tiroirs de distribution. Leur accès est particulièrement difficile.

### OBJET DE L'INVENTION

L'invention vise à proposer un procédé de débouchage d'orifices de pièces réalisées par fabrication additive et partant de puits débouchants.

### PRESENTATION DE L'INVENTION

En vue de la réalisation de ce but, on propose un procédé de débouchage de canalisations d'une pièce réalisée par fabrication additive, les canalisations partant d'au moins un puits débouchant à la surface de la pièce, le procédé comportant les étapes de :
- fabriquer un guide avec un corps destiné à être introduit dans le puits à ajustement, le guide comportant des canaux internes qui s'étendent depuis une base du guide accessible par l'utilisateur jusqu'à une paroi externe du corps ;
- nettoyer le puits et introduire le corps du guide dans le puits de sorte que les canaux du guide débouchent en regard des entrées des canalisations de la pièce à déboucher ;
- introduire par la base du guide dans au moins un canal ce celui-ci un outil fin et flexible, par exemple un câble métallique, et le faire pénétrer dans la canalisation de la pièce en regard jusqu'à la déboucher.

Les inventeurs ont expérimenté divers procédés de nettoyage. Il s'avère qu'un simple câble métallique flexible, porté par un mandrin d'un outil à percussion et introduit dans une canalisation permet d'ouvrir dans celle-ci un passage débouchant de sorte que la buse puisse être utilisée efficacement pour nettoyer complètement la canalisation. L'utilisation d'un guide selon l'invention permet de faire pénétrer à coup sûr le câble dans la canalisation depuis le puits.

Le guide pourra être fabriqué de façon additive, de préférence dans la même matière que le bloc pour ne pas introduire de pollution lors de l'opération, et bien entendu, réutilisé pour différentes pièces.

L'opération de nettoyage se fait de préférence à l'intérieur de l'enceinte close pour permettre la récupération de poudre.

### PRESENTATION DES FIGURES

L'invention sera mieux comprise à la lumière de la description détaillée qui suit d'un mode particulier de mise en œuvre en référence aux figures des dessins annexés parmi lesquelles :
- la figure 1 est une vue en perspective d'une pièce en alliage de titane obtenue par fabrication additive comportant deux puits desquels partent une série d'orifices à déboucher ;
- la figure 2 est une vue en perspective d'un guide selon l'invention adaptée à la pièce de la figure 1, illustré en transparence pour que les canaux internes soient visibles ;
- La figure 3 est une vue en coupe de la pièce munie du guide, montrant l'un des canaux du guide débouchant en regard de l'entrée d'une des canalisations de la pièce.

### DESCRIPTION DETAILLEE DE L'INVENTION

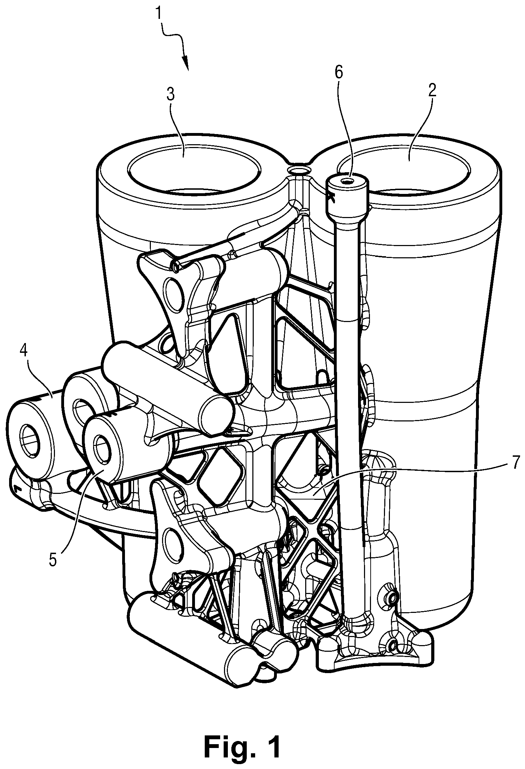

La figure 1 représente une pièce 1 en alliage de titane obtenue par fabrication additive par le procédé de fusion par faisceau d'électrons. Cette pièce 1 est un bloc hydraulique qui comporte deux puits 2,3 (typiquement d'un diamètre de quelques centimètres) destinés à recevoir des tiroirs de distribution, ainsi qu'une pluralité de canalisations fines (typiquement d'un diamètre de quelques millimètres), dont certaines comme les canalisations 4,5,6 débouchent sur l'extérieur par des ports, et d'autres comme la canalisation 7 s'étendent entre les puits 2,3.

La figure représente la pièce 1 entièrement nettoyée, mais il faut s'imaginer que la pièce sort de la machine de fabrication additive entourée et remplie d'un amalgame de particules de métal faiblement solidarisées entre elles qu'il convient d'éliminer. L'extérieur de la pièce 1 ainsi que l'intérieur des puits 2,3 est facile à nettoyer à l'aide par exemple d'une buse à air comprimé. L'intérieur des canalisations débouchantes 4,5,6 peut être nettoyé à l'aide d'un câble enfoncé progressivement dans les canalisations par leur débouché extérieur. Le câble pourra par exemple être tenu par le mandrin d'une perceuse à percussion ou tout autre outil motorisé portatif de sorte que le câble tourne et provoque des percussions sur la poudre amalgamée à l'intérieur des canalisations et dégage progressivement dans la canalisation un passage qui finit par déboucher entièrement la canalisation. Il suffit alors de finir le nettoyage de la canalisation à l'aide de la buse à air comprimé pour la débarrasser entièrement des particules amalgamées.

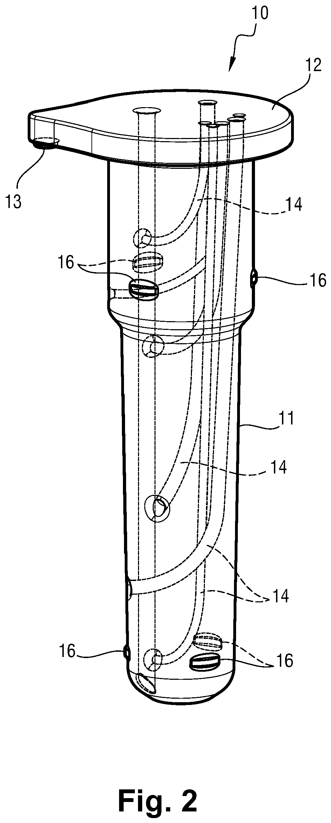

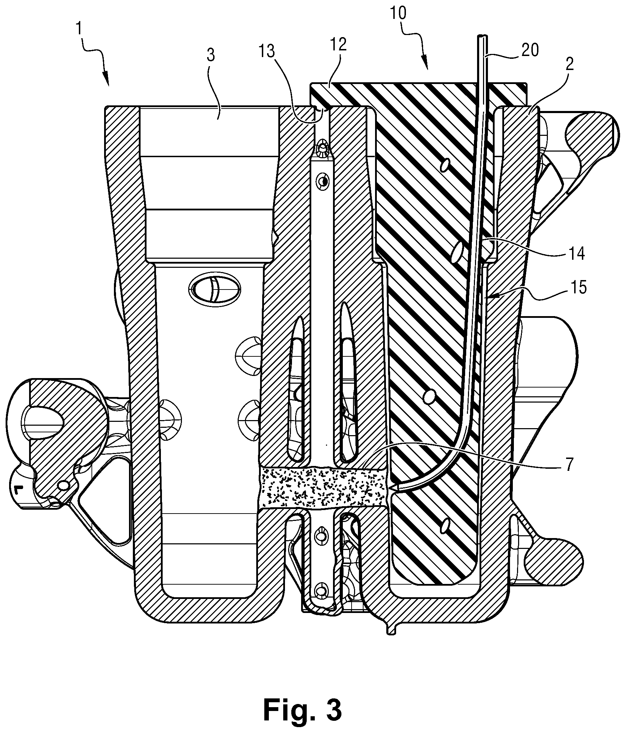

L'invention s'intéresse plus particulièrement au débouchage des canalisations telles que la canalisation 7 (également visible à la figure 3) qui sont difficiles d'accès pour un câble de nettoyage. Selon l'invention, on prévoit l'utilisation d'un guide 10 illustré à la figure 2, qui comporte un corps 11 destiné à être inséré dans l'un des puits 2,3 et qui comporte une base 12 qui reste extérieure au puits 2,3 et qui porte un doigt 13 destiné à être reçu dans une cavité ad-hoc ménagée sur la pièce 1 pour l'indexage du guide 10 dans le puits. Le guide 10, ici en matière plastique et obtenu par fabrication additive, comporte des canaux 14 qui débouchent d'une part sur la base 12 et d'autre part sur la paroi externe du corps 11 en regard d'une des canalisations internes de la pièce 1.

A la figure 3, le guide 10 a été mis en place dans le puits 2. On voit l'introduction d'un câble 20 dans l'un des canaux 14 qui guide ce câble jusqu'à l'entrée de la canalisation interne 7 de la pièce 1 remplie de particules amalgamées. Le câble 20 peut alors être introduit dans ladite canalisation pour la déboucher progressivement en étant mis en rotation et percuté par une perceuse à percussion ou tout autre outil portatif similaire. Une fois la canalisation débouchée, on retire le câble 20 et on l'engage dans un autre des canaux 14 du guide 10 pour déboucher une autre canalisation interne de la pièce 1. Quand toutes les canalisations sont débouchées, on retire le guide 10 et on finit le nettoyage des canalisations à l'aide de la buse pour les débarrasser entièrement de la poudre amalgamée.

Le corps 11 a un diamètre légèrement inférieur à celui du puits dans lequel il est introduit de façon à ménager un espace 15 entre le guide 10 et la paroi du puits 2 adapté à recevoir la poudre métallique décrochée par le câble lors de son introduction dans les canalisations de la pièce 1. Pour centrer le guide 10 dans le puits 2, le corps 11 comporte des plots 16 qui coopèrent avec la paroi du puits 2 pour assurer l'introduction à ajustement et le positionnement du guide 10 dans le puits 2.

On peut fabriquer deux guides 10 distincts pour pénétrer dans chacun des puits 2,3 de la pièce. Alternativement, si les deux puits ont un diamètre et une profondeur identiques, on peut fabriquer un unique guide qui comportera tous les canaux nécessaires pour atteindre toutes les canalisations débouchant dans l'un ou l'autre des puits.

L'invention n'est pas limitée à ce qui vient d'être décrit mais englobe au contraire toute variante entrant dans le cadre défini par les revendications.

En particulier, bien que dans l'exemple illustré, on utilise un câble métallique en guise d'outil de débouchage, on pourra plus généralement utiliser tout outil fin et flexible adapté à pénétrer dans les canalisations pour y creuser un canal dans la poudre amalgamée. On pourra imprimer à cet outil tout mouvement (rotation, percussions, vibrations...) propre à faciliter le creusement du canal.

## Revendications

1. Procédé de débouchage de canalisations (7) d'une pièce (1) réalisée par fabrication additive, les canalisations partant d'au moins un puits (2,3) débouchant à la surface de la pièce, le procédé comportant les étapes de :
- fabriquer un guide (10) avec un corps (11) destiné à être introduit dans le puits à ajustement, le guide comportant des canaux internes (14) qui s'étendent depuis une base (12) du guide accessible par l'utilisateur jusqu'à une paroi externe du corps ;
- nettoyer le puits et introduire le corps du guide dans le puits de sorte que les canaux du guide débouchent en regard des entrées des canalisations (7) à déboucher ;
- introduire par la base du guide dans au moins un canal de celui-ci un outil fin et flexible (20), par exemple un câble métallique, et le faire pénétrer dans la canalisation de la pièce en regard jusqu'à la déboucher.

2. Procédé selon la revendication 1, dans lequel on imprime à l'outil flexible au moins un mouvement de rotation, de vibration, ou de percussion.

3. Procédé selon la revendication 1, dans lequel on utilise le même guide (10) pour déboucher des canalisations partant de deux puits distincts, le guide comportant tous les canaux propres à déboucher en regard de toutes les canalisations des deux puits.

4. Procédé selon la revendication 1, dans lequel le guide (10) est fabriqué en matière plastique ou en résine à l'aide d'un procédé de fabrication additive.

5. Procédé selon la revendication 1, dans lequel la base (12) du guide (10) porte un doigt (13) d'indexation du guide en position dans la pièce.

## Patentansprüche

1. Verfahren zum Beseitigen von Verstopfungen von Kanalsystemen (7) in einem durch additive Fertigung hergestellten Werkstück (1), wobei die Kanalsysteme von mindestens einer Bohrung (2, 3) ausgehen, die auf der Oberfläche des Werkstücks mündet, wobei das Verfahren die Schritte umfasst:
- Herstellen einer Führung (10) mit einem Körper (11), der dazu bestimmt ist, in die Bohrung mit Passung eingefügt zu werden, wobei die Führung innere Kanäle (14) umfasst, die sich von einer für einen Nutzer zugänglichen Basis (12) der Führung bis zu einer Außenwand des Körpers erstrecken;
- Reinigen der Bohrung und Einfügen des Körpers der Führung in die Bohrung, derart, dass die Kanäle der Führung gegenüber den Eingängen der von Verstopfungen zu beseitigenden Kanalsysteme (7) münden;
- Einfügen eines feinen und flexiblen Werkzeugs (20), beispielsweise eines Metallkabels, durch die Basis der Führung in mindestens einen Kanal derselben und Veranlassen, dass das Werkzeug in das Kanalsystem des gegenüberliegenden Werkstücks eindringt, bis dieses von Verstopfungen befreit ist.

2. Verfahren nach Anspruch 1, bei dem man auf das flexible Werkzeug mindestens eine Dreh-, Vibrations- oder Stoßbewegung überträgt.

3. Verfahren nach Anspruch 1, bei dem man die gleiche Führung (10) zum Beseitigen von Verstopfungen in Kanalsystemen verwendet, die von zwei verschiedenen Bohrungen ausgehen, wobei die Führung alle Kanäle, die zum Beseitigen von Verstopfungen geeignet sind, gegenüber allen Kanalsystemen der beiden Bohrungen umfasst.

4. Verfahren nach Anspruch 1, bei dem die Führung (10) aus Kunststoff oder aus Harz mit Hilfe eines additiven Fertigungsverfahrens hergestellt wird.

5. Verfahren nach Anspruch 1, bei dem die Basis (12) der Führung (10) einen Indexierungsfinger (13) zur Indexierung der Position der Führung in dem Werkstück trägt.

## Claims

1. A method of unclogging ducts (7) in a part (1) made by additive manufacturing, the ducts running from at least one well (2, 3) that opens out into the surface of the part, the method comprising the steps of:
- fabricating a guide (10) with a body (11) that is designed to fit in the well, the guide having internal channels (14) that extend from a base (12) of the guide that is accessible by a user to an outside wall of the body;
- cleaning the well and inserting the body of the guide in the well so that channels in the guide open out in register with inlets of ducts (7) that are to be unclogged; and
- inserting a thin flexible tool (20), e.g. a metal cable, through the base of the guide into at least one channel therein and causing the tool to penetrate into the duct in register in the part so as to unclog it.

2. A method according to claim 1, wherein at least rotary, vibratory, or percussive motion is imparted to the flexible tool.

3. A method according to claim 1, wherein the same guide (10) is used for unclogging ducts starting from two distinct wells, the guide having all of the unclogging channels for placing in register with all of the ducts in both wells.

4. A method according to claim 1, wherein the guide (10) is made out of plastics material or of resin by using an additive manufacturing method.

5. A method according to claim 1, wherein the base (12) of the guide (10) has an indexing finger (13) for indexing the position of the guide in the part.
